# EUROPEAN PATENT APPLICATION

(11) **EP 4 636 883 A1**
(43) Date of publication of application: **22.10.2025**
(21) Application number: 25169774.4
(22) Date of filing: 10.04.2025
(51) Int. Cl.: H01M 10/04, H01M 50/178, B21D 5/08, H01M 50/557, H01M 50/533, H01M 50/176, H01M 50/105

(54) **APPARATUS AND METHOD FOR MANUFACTURING A SECONDARY BATTERY**

(30) Priority: 17.04.2024 KR 20240051524
(71) Applicant: SAMSUNG SDI CO., LTD., Yongin-si, Gyeonggi-do 17084 (KR)
(72) Inventor: Moon, Eun Jeong, Suwon-si, Gyeonggi-do 16678 (KR)
(74) Representative: Gulde & Partner

(57) **Abstract**

An apparatus and a method for manufacturing a secondary battery, and a secondary battery manufactured using the apparatus and/or method are disclosed. An apparatus for manufacturing a secondary battery includes a roller configured to apply a force in a first direction to at least a portion of a tab extending from an electrode assembly to form a bent portion in at least the portion of the tab, and a tab pusher configured to apply a force to the tab in a second direction different from the first direction such that the tab has a shape of the number "11" centered on the bent portion.

## Description

### BACKGROUND

### 1. Field

Aspects of embodiments of the present disclosure relate to an apparatus and a method for manufacturing a secondary battery, and a secondary battery manufactured using the apparatus and/or method.

### 2. Description of the Related Art

Recently, with the rapid spread of electronic devices that use batteries, such as mobile phones, notebook computers, and electric vehicles, demand for secondary batteries with high energy density and high capacity has rapidly increased. Accordingly, research and development to improve the performance of lithium secondary batteries are being actively conducted.

The lithium secondary batteries are batteries including a positive electrode and a negative electrode, each of which includes an active material capable of intercalation and deintercalation of lithium ions, and an electrolyte, and generate electric energy through an oxidation-reduction reaction occurring when lithium ions are intercalated/deintercalated into/from the positive electrode and the negative electrode.

Secondary batteries include an electrode assembly in which a positive electrode, a negative electrode, and a separator are stacked. The secondary batteries include tabs extending from the electrode assembly to allow the electrode assembly to be electrically connected to the outside. In addition, the secondary batteries include a case in which the electrode assembly is accommodated. The tabs are partially located inside the case, and partially exposed to the outside of the case. In this case, there may be a problem that the tabs located inside the case occupy a significant portion of a volume of the case. For example, the tabs located inside the case may be formed in a U-shape in the case, and, thus, there may be a problem in that bending quality is deteriorated and an upper space margin inside the case is not secured.

### SUMMARY

According to an aspect of one or more embodiments of the present invention, bending quality of a tab is improved.

According to another aspect of one or more embodiments of the present invention, an internal space margin of a case is secured.

However, aspects and problems to be solved by the present invention are not limited to the above-mentioned aspects and problems to be solved, and other aspects and problems to be solved not mentioned may be clearly understood by those skilled in the art from the following description.

According to one or more embodiments of the present invention, an apparatus for manufacturing a secondary battery includes a roller configured to apply a force in a first direction to at least a portion of a tab extending from an electrode assembly to form a preliminary bent portion in at least the portion of the tab, and a tab pusher configured to apply a force to the tab in a second direction different from the first direction such that the tab has a shape, in which one side of the bent tab and the other side of the bent tab are formed parallel or in an angle of 20° to -20° with respect to each other (i.e. a shape of the number "11") centered on the preliminary bent portion. In the following, the shape will be denoted as shape of the number "11".

According to one or more embodiments of the present invention, a method of manufacturing a secondary battery includes forming a preliminary bent portion in at least a portion of a tab extending from an electrode assembly by applying a force in a first direction to at least the portion of the tab, and forming the tab in a shape of the number "11" centered on the preliminary bent portion by applying a force to the tab in a second direction different from the first direction.

According to one or more embodiments of the present invention, a secondary battery includes a case, an electrode assembly accommodated in the case, a tab extending from the electrode assembly and including a portion exposed to an outside of the case, wherein another portion of the tab is bent along a preliminary bent portion in the case.

### BRIEF DESCRIPTION OF THE DRAWINGS

The following drawings included with the present specification illustrate some example embodiments of the present invention, and are provided for further understanding of the technical spirit of the present invention together with the detailed description of the present invention to be described later; however, the present invention is not to be construed as being limited to details shown in the accompanying drawings, in which:
FIGS. 1 to 4 are views each schematically illustrating a lithium secondary battery according to an embodiment;
FIG. 5A to FIG. 5C are sequential views illustrating a conventional apparatus and/or method for manufacturing a secondary battery;
FIG. 6 is an image illustrating a conventionally manufactured tab;
FIG. 7 is a flowchart illustrating a method of manufacturing a secondary battery according to an embodiment of the present invention;
FIG. 8A and FIG. 8B are schematic views illustrating a process by which a secondary battery is manufactured, according to an embodiment of the present invention;
FIG. 9A to FIG. 9D are schematic views illustrating a process by which a secondary battery is manufactured, according to an embodiment of the present invention;
FIG. 10A to FIG. 10C are schematic views illustrating an apparatus and/or method for manufacturing a secondary battery according to an embodiment of the present invention; and
FIG. 11A and FIG. 11B are images illustrating a tab manufactured according to an embodiment of the present invention.

### DETAILED DESCRIPTION

Herein, one or more embodiments of the present invention will be described in further detail. However, these are presented as an example, and the present invention is not limited thereby, and the present invention is to be defined by the scope of the claims. The terms or words used in the present specification and claims are not to be construed as being limited to ordinary or dictionary meanings and are to be construed as having meanings and concepts consistent with the technical spirit of the present invention based on the principle that an inventor can appropriately define concepts and terms to explain the invention of the inventor in the best way. Therefore, the embodiments described herein and the configuration illustrated in the drawings are provided as some example some embodiments and are not representative of the full the technical spirit of the present invention, and, thus, it is to be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, for facilitating understanding of the invention, the accompanying drawings may be illustrated not to actual scale. Rather, sizes of some components may be exaggerated. In addition, the same reference numerals may be assigned to the same components in different embodiments.

In addition, when it is described that a component is "connected," "coupled," or "accessed" to another component, these components may be directly connected, coupled, or accessed to each other, or one or more other components may be "interposed" between these components, or these components are "connected", "coupled" or "accessed" through another component.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more" and "at least one" modify the entire list of elements and do not modify the individual elements of the list.

Unless otherwise specified herein, when a part such as a layer, a film, an area, or a plate is described as being "on" another part, this includes not only a case in which the part is "directly on" another part, but also a case in which one or more other parts are present therebetween.

Unless otherwise specified herein, a singular expression may also include a plural meaning

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

As used herein, "a combination thereof" may mean a mixture, a laminate, a composite, a copolymer, an alloy, a blend, a reaction product, and the like of components.

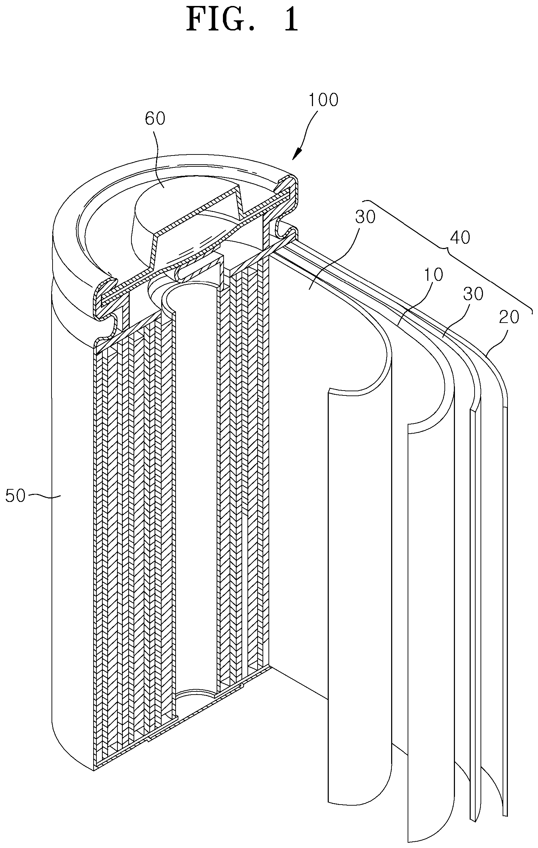

FIGS. 1 to 4 are views each schematically illustrating a lithium secondary battery according to an embodiment.

### Lithium secondary battery 100

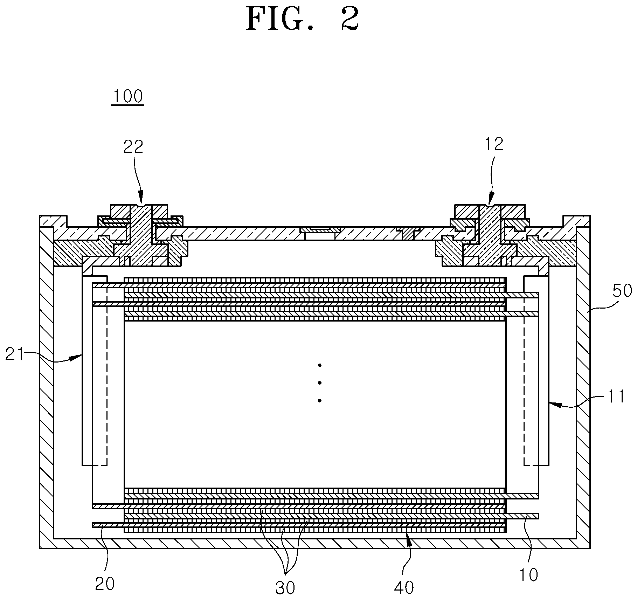

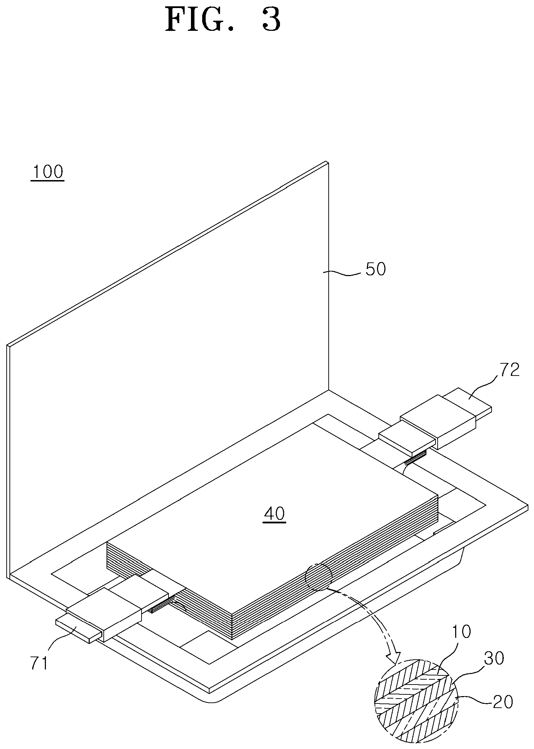

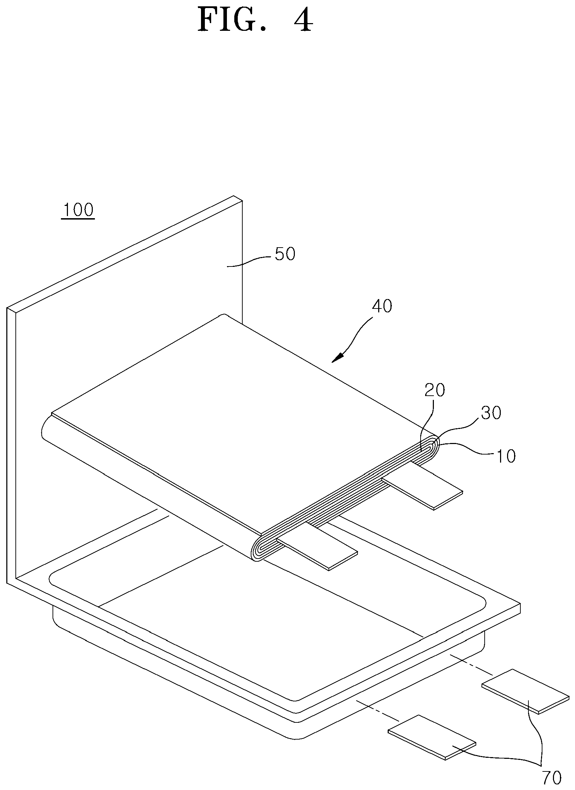

A lithium secondary battery 100 may be classified as cylindrical, prismatic, pouch-type, and coin-type batteries, according to their shapes. FIGS. 1 to 4 are schematic views each illustrating the lithium secondary battery according to one embodiment, and it can be said that FIG. 1 illustrates a cylindrical battery, FIG. 2 illustrates a prismatic battery, and FIGS. 3 and 4 illustrate pouch-type batteries. Referring to FIGS 1 to 4, the lithium secondary battery 100 may include an electrode assembly 40 including a separator 30 interposed between a positive electrode 10 and a negative electrode 20, and a case 50 in which the electrode assembly 40 is housed. The positive electrode 10, the negative electrode 20, and the separator 30 may be impregnated with an electrolyte (not shown). In an embodiment, as shown in FIG. 1, the lithium secondary battery 100 may include a sealing member 60 that seals the case 50. In an embodiment, as shown in FIG. 2, the lithium secondary battery 100 may include a positive electrode lead tab 11, a positive electrode terminal 12, a negative electrode lead tab 21, and a negative electrode terminal 22. In an embodiment, as shown in FIGS. 3 and 4, the lithium secondary battery 100 may include electrode tabs 70, that is, a positive electrode tab 71 and a negative electrode tab 72, which function as electrical paths for inducing a current formed in the electrode assembly 40 to the outside.

As described with reference to FIGS. 1 to 4, the secondary battery 100 includes the electrode assembly 40 and the case 50 in which the electrode assembly 40 is accommodated. The electrode assembly 40 is electrically connected to the outside, and is charged with electrical energy by an external source and/or discharges (supplies) electrical energy to the outside. In an embodiment, the secondary battery 100 includes tabs that are electrically connected to the outside.

The tabs include the electrode tabs 70. The electrode tabs 70 are formed to extend from the electrode assembly 40. The tabs include the negative electrode tab 72 connected to the negative electrode 20 of the electrode assembly 40 and the positive electrode tab 71 connected to the positive electrode 10 of the electrode assembly 40. The electrode tabs 70 extend from the electrode assembly 40 and are located inside the case 50. In an embodiment, the electrode tabs 70 are each, for example, a base material tab extending from a base material of the positive electrode 10 or the negative electrode 20

The electrode tabs 70 are connected to the lead tabs 11 and 12 to be electrically connected to the outside. In an embodiment, the lead tabs 11 and 12 are partially located inside the case 50, while another portion is exposed to the outside of the case 50.

In an embodiment, the electrode tabs 70 extend from each of the negative electrode 20 and the positive electrode 10 included in the electrode assembly 40, and are formed in a plural number. Accordingly, it is desired to efficiently accommodate the electrode tabs 70 in the case 50. In addition, it is desired that the electrode tabs 70 be shaped to be easily connected to the lead tabs 11 and 12. To this end, a process of efficiently accommodating and/or organizing the electrode tabs 70 in the case 50 will be described below.

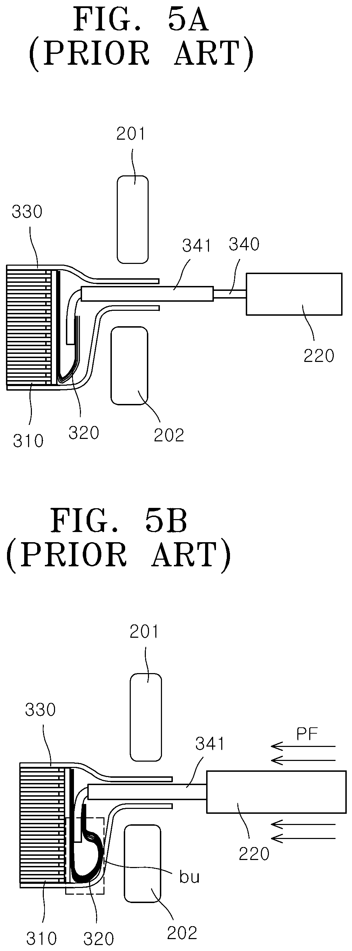

FIG. 5A to FIG. 5C are sequential views illustrating a conventional apparatus and/or method for manufacturing a secondary battery.

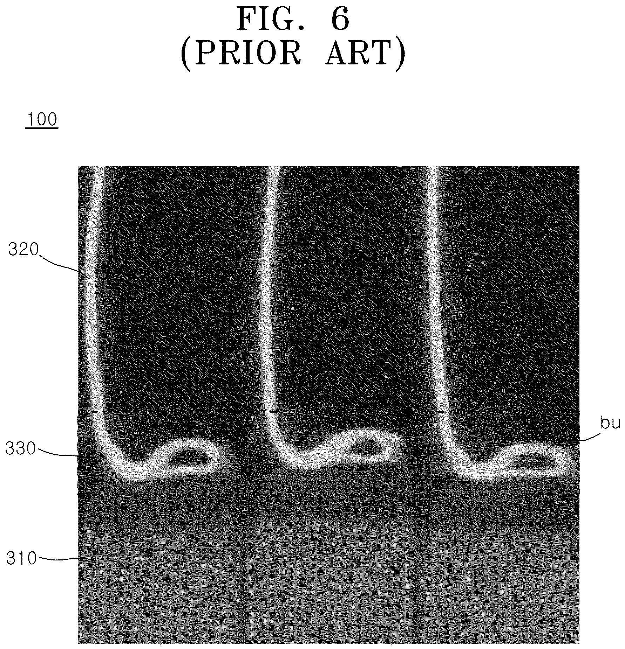

FIG. 6 is an image illustrating a conventionally manufactured tab.

As described with reference to FIGS. 1 to 6, a secondary battery includes an electrode assembly 310 (e.g., including the electrode assembly 40 described in FIGS. 1 to 4) and a case 330 (e.g., including the case 50 described in FIGS. 1 to 4) that accommodates the electrode assembly 310, and tabs 320 (e.g., including the electrode tabs 70 described in FIGS. 1 to 4) extending from the electrode assembly 310.

The tabs 320 are accommodated in the case 330, and may be subjected to taping, overlapping, cutting, bonding, and/or bending processes to be connected to lead tabs 340 (e.g., including the lead tabs 11 and 12 described in FIGS. 1 to 4). Through this, the tabs 320 are connected to the lead tabs 340. At this time, the tabs 320 may be connected to the lead tabs 340, for example, through welding.

Further, the lead tab 340 is partially located inside the case 330, while another portion is exposed to the outside of the case 330. At this time, to control an extent to which the lead tab 340 is exposed to the outside of the case 330, a pushing process is performed to push the tab 320 connected to the lead tab 340 into the case 330. In addition, to ensure that the tab 320 is smoothly inserted into the case 330 during the pushing process, a bending process of bending a portion of the tab 320 is further performed. The bending process is a process of forming a V-shaped bent portion in a portion of the tab 320. The bending process is a process of partially bending the tab 320 by a force to form the V-shaped bent portion. FIGS. 5A to 5C are schematic views of the pushing process performed after such a bending process is performed.

FIG. 5A illustrates a process in which a tape 341 is provided on the lead tab 340. The tape 341 is formed to surround at least a portion of the lead tab 340. The tape 341 is provided for attachment between the lead tab 340 and the case 330. The tape 341 includes, for example, a polypropylene (PP) tape.

FIG. 5B illustrates a process of inserting the lead tab 340 into the case 330 by a tab pusher 220. The tab pusher 220 is connected to the other side of the lead tab 340 and applies a force to the lead tab 340. For example, the tab pusher 220 pushes the lead tab 340 toward the case 330 (e.g., applies a force in a direction indicated by PF in FIG. 5B).

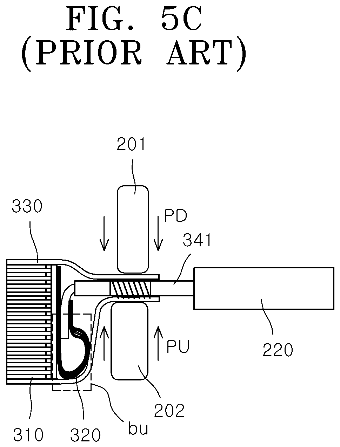

FIG. 5C illustrates a sealing process of fixing the lead tab 340, on which the tape 341 is provided, to the case 330. When the lead tab 340 is properly inserted into the case 330, the tab pusher 220 stops (completes) pushing the lead tab 340. When the pushing of the tab pusher 220 is completed, a sealing top 201 and a sealing bottom 202 apply forces toward the case 330. For example, the sealing top 201 applies a force in a downward direction (a PD direction) toward the case 330 from above an opening of the case 330. Concurrently (e.g., simultaneously) or sequentially, the sealing bottom 202 applies a force in an upward direction (a PU direction) toward the case 330 from below the opening of the case 330. At this time, the PD direction in which the sealing top 201 moves and the PU direction in which the sealing bottom 202 moves are opposite directions. In addition, the sealing top 201 and the sealing bottom 202 are located to face each other and move toward each other. At this time, the lead tab 340, which spans the inside and outside of the case 330, is located at the opening of the case 330. The sealing top 201 and the sealing bottom 202 apply forces toward the opening of the case 330 so that the lead tab 340 is fixed to the opening of the case 330. For example, the tape 341 surrounding the lead tab 340 is fixed to the case 330.

At this time, as illustrated in FIGS. 5B and 5C, the bent portion of the tab 320 may be deformed as the tab pusher 220 pushes the lead tab 340 toward the case 330. The designator bu in FIGS. 5B and 5C illustrates such deformation of the bent portion of the tab 320. For example, when the tab 320 receives a force, the bent portion may not maintain the V-shape and may be deformed forming a U-shaped bend bu.

FIG. 6 illustrates an image of an actual battery in which the above-described U-shaped bend bu is formed inside the case 330.

In this case, as illustrated in FIGS. 5 and 6, the tab 320 in which the U-shaped bend is formed occupies a large volume in an upper side space of the case 330 (e.g., the space in the direction of the opening of the case). Accordingly, the tab 320 unnecessarily wastes the upper side space.

According to one or more embodiments of the present invention, herein, an improved U-shape of the tab 320 and/or increased utilization rate of the upper space of the case 330 will be described in further detail.

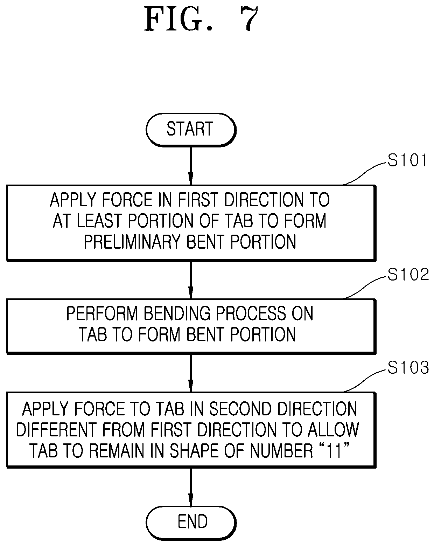

FIG. 7 is a flowchart illustrating a method of manufacturing a secondary battery according to an embodiment of the present invention.

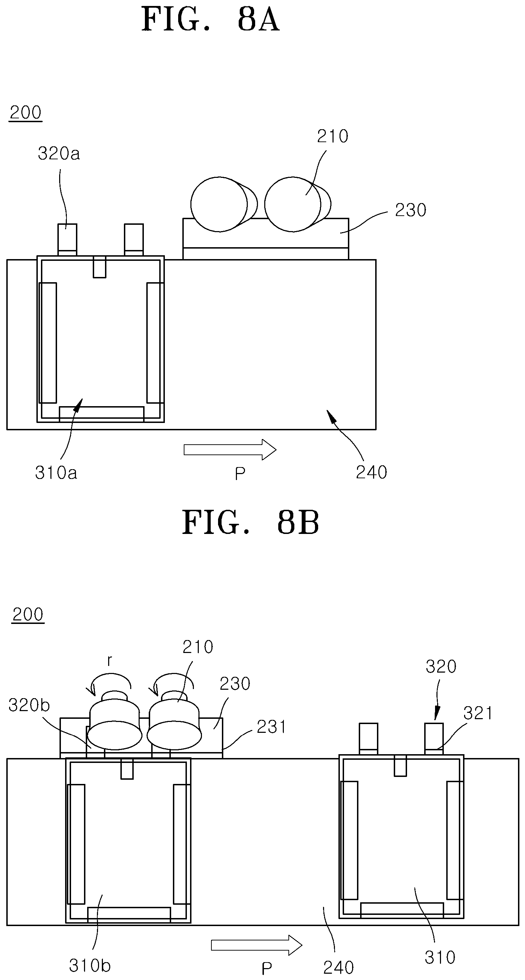

FIG. 8A and FIG. 8B are schematic views illustrating a process by which a secondary battery is manufactured, according to an embodiment of the present invention.

The method of manufacturing a secondary battery according to an embodiment of the present invention includes performing additional processes between a taping process and a preliminary welding process to improve the U-shape of the tab 320. The additional processes include, for example, a preliminary bent portion forming process of forming a preliminary bent portion 321 (see FIGS. 8A and 8B) in the tab 320. In FIGS. 7, 8A, and 8B, the additional processes and a device for performing the same will be described.

As illustrated in FIG. 8A and FIG. 8B, an apparatus 200 for manufacturing a secondary battery according to an embodiment of the present invention includes a roller 210. In addition, for example, the apparatus 200 for manufacturing a secondary battery further includes a tab pusher 220 (e.g., including the tab pusher 220 described in FIGS. 5 and 6). In an embodiment, for example, the apparatus 200 for manufacturing a secondary battery may further include a support 230 and a transfer portion 240.

The roller 210 applies a force to at least a portion of the tab 320 in a first direction to form a preliminary bent portion 321. For example, the roller 210 applies a force to at least a portion of the tab 320 extending from the electrode assembly 310 in the first direction to form the preliminary bent portion 321 in at least the portion of the tab 320. The first direction is, for example, a direction parallel to a direction P in which the electrode assembly 310 moves. However, the roller 210 may form the preliminary bent portion 321 by applying a force to at least a portion of the tab in a direction opposite to the first direction. For example, the roller 210 may form the preliminary bent portion 321 by applying a force in a direction opposite to the direction P in which the electrode assembly 310 moves. That is, the roller 210 may form the preliminary bent portion 321 on the tab 320, which is located on a groove 231, from any direction along the groove 231. Further, even if the groove 231 is not formed, the roller 210 may form the preliminary bent portion 321 on the tab 320 while moving on the tab 320 in the first direction or in the direction opposite to the first direction.

In an embodiment, a jig (not shown) applies a force to the tab 320 in a second direction different from the first direction to cause the preliminary bent portion 321 to be formed into a bent portion. The second direction is, for example, a direction perpendicular to the first direction.

The tab pusher 220 applies a force to the tab 320 in the second direction different from the first direction to maintain the tab 320 in the shape of the number "11" centered on the bent portion. As illustrated in FIG. 7, the method of manufacturing a secondary battery according to an embodiment of the present invention includes an operation S101 of applying a force in the first direction through the roller 210 to at least a portion of the tab 320 to form the preliminary bent portion 321.

For example, the roller 210 may apply a force in the first direction to at least a portion of the tab 320 (e.g., including the electrode tab 70 described in FIG. 4 and/or the tab 320 described in FIGS. 5A to 6) extending from the electrode assembly 310 (e.g., including the electrode assembly 40 described in FIGS. 1 to 4 and/or the electrode assembly 310 described in FIGS. 5A to 6) to form the preliminary bent portion 321 in at least the portion of the tab 320.

In an embodiment, the first direction is a direction perpendicular to a direction in which the tab 320 extends. The tab 320 is formed by extending the electrode (e.g., including the positive electrode 10 and the negative electrode 20) included in the electrode assembly 310. The electrode includes a base material and an active material layer formed on at least a portion of the substrate. The portion of the base material, on which the active material layer is formed, in the electrode is referred to as a coated portion. A portion of the electrode on which the active material layer is not formed is referred to as an uncoated portion. The tab 320 is included in the uncoated portion. For example, the tab 320 is an uncoated portion in the form of a plate. The first direction is a direction in which the tab 320 moves on a plate-shaped surface and is perpendicular to the direction in which the tab 320 extends.

The operation S101 includes forming the preliminary bent portion 321 while the roller 210 (see FIG. 8) rotates in the first direction on the tab 320.

For example, operation S101 includes moving the tab 320 in the first direction on the support 230 (see FIGS. 8A and 8B), in which the groove 231 (see FIGS. 8A and 8B) is formed.

In an embodiment, as illustrated FIG. 8A, one or more electrode assemblies 310 are provided on the transfer portion 240. The transfer portion 240 transfers the electrode assemblies 310 located on the transfer portion 240 toward the roller 210. In an embodiment, the support 230 is located below the roller 210. In an embodiment, the support 230 is formed at a same height as the transfer portion 240 without a step, and/or is located slightly below the transfer portion 240 with a step from the transfer portion 240. The support 230 is located on a side of the transfer portion 240. Accordingly, as illustrated in FIGS. 8A and 8B, the electrode assembly 310 is located on the transfer portion 240, and the tab 320 extending from the electrode assembly 310 is located outside the side of the transfer portion 240. Accordingly, as the electrode assembly 310 is transferred through the transfer portion 240, the tab 320 can be placed on the support 230. In addition, the roller 210 is stepped from the transfer portion 240 and is located higher than the transfer portion 240. In an embodiment, the roller 210 can be turned on or off. When the roller 210 is in the on-state, the roller 210 is in contact with the transfer portion 240 and is located on the transfer portion 240. When the roller 210 is in the off-state, the roller 210 is spaced apart from the transfer portion 240. In an embodiment, the roller 210 may move away from (off-state) or closer to (on-state) the support 230 while rotating around a point. In another embodiment, the roller 210 may move away from (off-state) or closer to (on-state) the support 230 while moving perpendicular to the support 230. For example, the transfer portion 240 may transfer an electrode assembly 310a in a P direction. At the same time, the transfer portion 240 may transfer a tab 320a toward the support 230.

Further, for example, the operation S101 may include rotating the roller 210 along the groove 231 while applying a force to the tab 320 placed on the support 230 to form the preliminary bent portion 321. For example, as illustrated in FIG. 8B, the transfer portion 240 transfers an electrode assembly 310b to the front of the support 230. Accordingly, a tab 320b is placed on the support 230. When the tab 320b is placed on the support 230, the roller 210 is in the on-state and approaches the support 230. The roller 210 rotates in a direction (e.g., a clockwise direction r, or a counterclockwise direction) to form the preliminary bent portion 321 on the tab 320b. In an embodiment, the roller 210 includes a protrusion protruding along an outer peripheral surface thereof at a portion in contact with the tab 320b. The protrusion forms the preliminary bent portion 321 on the tab 320b while rotating along the groove 231 formed in the support 230. In an embodiment, the groove 231 is a concave portion formed in an upper surface of the support 230, and is formed to correspond to the preliminary bent portion 321. Accordingly, the groove 231 may be a concave portion formed in the upper surface of the support 230 in the first direction.

In an embodiment, for example, the preliminary bent portion 321 is formed at a position of 0.2 mm (including 0.2 mm) to 0.8 mm (including 0.8 mm) from the electrode assembly 310 in a direction in which the tab 320 extends.

In an embodiment, the electrode assembly 310 includes a portion up to the coated portion formed on each electrode. For example, lengths of a negative electrode coated portion, a positive electrode coated portion, and a separator may be different. Accordingly, an end of the electrode assembly 310 may have an uneven shape by a negative electrode coated portion (having a side connected to a negative electrode tab that is a negative electrode uncoated portion), the positive electrode coated portion (having a side connected to a positive electrode tab that is a positive electrode uncoated portion), and/or the separator. In this case, the reference for the end of the electrode assembly 310 may be an average position of an end of each of the negative electrode coated portion, the positive electrode coated portion, and the separator.

In an embodiment, for example, the preliminary bent portion 321 is formed at a position of 0.2 mm to 0.7 mm from the electrode assembly 310. In an embodiment, for example, the preliminary bent portion 321 is formed at a position of 0.2 mm to 0.6 mm from the electrode assembly 310. In an embodiment, for example, the preliminary bent portion 321 is formed at a position of 0.3 mm to 0.8 mm from the electrode assembly 310. In an embodiment, for example, the preliminary bent portion 321 is formed at a position of 0.3 mm to 0.7 mm from the electrode assembly 310. In an embodiment, for example, the preliminary bent portion 321 is formed at a position of 0.4 mm to 0.8 mm from the electrode assembly 310. In an embodiment, for example, the preliminary bent portion 321 is formed at a position of 0.4 mm to 0.7 mm from the electrode assembly 310. In an embodiment, for example, the preliminary bent portion 321 is formed at a position of 0.4 mm to 0.6 mm from the electrode assembly 310.

Through these processes, the secondary battery 100 manufactured by the method and/or apparatus for manufacturing a secondary battery according to an embodiment of the present invention can provide the tab 320 on which the preliminary bent portion 321 is formed.

As illustrated in FIG. 7, the method of manufacturing a secondary battery according to an embodiment of the present invention includes an operation S102 of performing a bending process on the tab 320 to form the bent portion. For example, the jig performs the bending process on the tab 320. In an embodiment, the bending process includes, for example, a block bending process, a roller bending process, and the like. The jig includes an upper jig located above the tabs 320 and a lower jig located below the tabs 320. The upper jig descends toward the tabs 320. In addition, for example, the lower jig ascends toward the tabs 320. At this time, the upper jig and lower jig may concurrently (e.g., simultaneously) descend and ascend toward the tabs 320. The upper jig and lower jig may push the engaged tabs 320 toward the electrode assembly. In another embodiment, the upper jig may descend toward the tabs 320 and then the lower jig may ascend toward the tabs 320. In an embodiment, the lower jig may apply a force toward a position on the tab 320, which is offset from the upper jig. In an embodiment, the lower jig may ascend toward the tabs 320 and then push the tabs 320 toward the electrode assembly. Through this, the preliminary bent portion 321 is formed into the bent portion. For example, the bent portion may be formed in a V-shape.

As illustrated in FIG. 7, in the method of manufacturing a secondary battery according to an embodiment of the present invention, a force is applied to the tab 320 in the second direction that is different from the first direction such that the tab 320 remains in the shape of the number "11" centered on the bent portion. The shape of the number "11" includes a shape in which one side of the bent tab 320 and the other side of the bent tab 320 are formed parallel or nearly parallel relative to the bent portion. For example, a side and another side of the tab 320 may be formed to have an angle of 0° to 40° with respect to each other based on the bent portion.

The second direction is a direction opposite to the direction in which the tab 320 extends. The second direction is, for example, a direction toward the case 330.

For example, an operation S103 includes accommodating the electrode assembly 310 and the tabs 320 extending from the electrode assembly 310 in the case 330. Accordingly, the case 330 accommodates the electrode assembly 310, the tabs 320, and a portion of the lead tabs 340 connected to the tabs 320. In addition, the operation S103 includes applying a force to the tab 320 in the second direction toward the case 330.

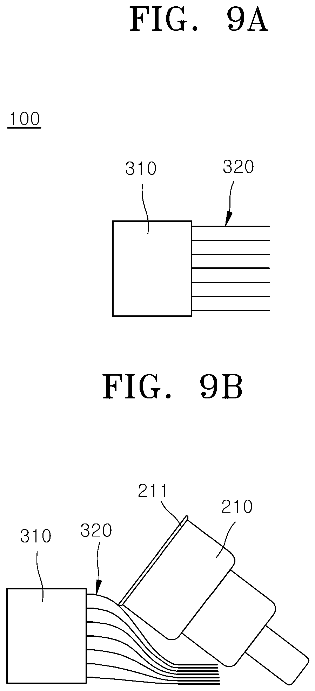

Accordingly, the tab 320 can remain in the shape of the number "11" even if a force is applied in the second direction by the tab pusher, thereby improving bending quality and/or securing an upper space margin. In addition, the lead tab 340 may be appropriately exposed to the outside of the case 330. The operation S102 will be described in further detail with reference to FIGS. 9A to 9D.

Through this, the method and/or apparatus for manufacturing a secondary battery according to an embodiment of the present invention can improve the tab 320 being bent into a U-shape, while efficiently utilizing the upper portion of the case 330.

FIG. 9A to FIG. 9D are schematic views illustrating a process by which a secondary battery is manufactured, according to an embodiment of the present invention.

FIG. 9A illustrates the secondary battery 100 according to an embodiment of the present invention, and the electrode assembly 310 and the tabs 320 extending from the electrode assembly 310.

FIG. 9B illustrates that the roller 210 in the on-state approaches the tabs 320 illustrated in FIG. 9A. In an embodiment, as illustrated in FIG. 9B, the roller 210 includes a protrusion 211 formed along an outer peripheral surface of a side thereof.

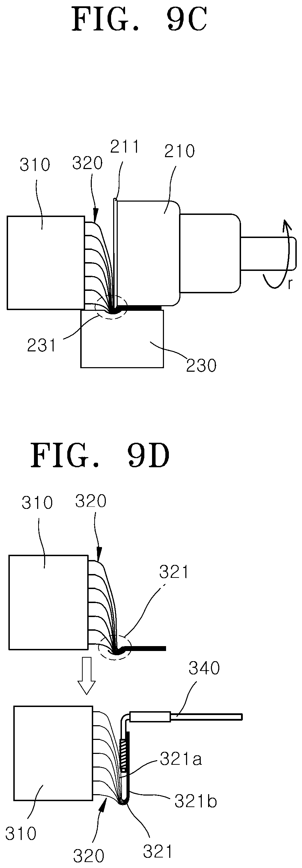

FIG. 9C illustrates that the roller 210 rotatably moves in the first direction along the groove 231 formed on the support 230 to form the preliminary bent portion 321 on the tab 320.

FIG. 9D illustrates that both sides of the bent tab 320 maintain the shape of the number "11" centered on the bent portion. As illustrated in FIG. 9D, when the lead tab 340 is pushed toward the case (omitted in FIGS. 9A to 9D for convenience of description) by the tab pusher 220, the tab 320 forms the bent portion along the preliminary bent portion 321. In addition, the tab 320 remains in the shape of the number "11" centered on the bent portion. Accordingly, the tab 320 may not form a U-shaped bend.

In an embodiment, a first portion 321a of the tab 320 facing a side from the bent portion (formed from the preliminary bent portion 321) and a second portion 321b of the tab 320 facing another side from the bent portion may be formed to have an angle of 20° to -20° with respect to each other. For example, the first portion 321a and the second portion 321b may be formed in a V-shape with an angle of 40° centered on the bent portion. In an embodiment, for example, the first portion 321a and the second portion 321b may be formed to have an angle of 0° with respect to each other. In this case, the first portion 321a and the second portion 321b may be formed in the shape of the number "11" or a shape very close to the shape of the number "11."

The first portion 321a is a region of the tab 320. The first portion 321a is, for example, a region from the electrode assembly 310 to the bent portion.

The second portion 321b is another region of the tab 320. The second portion 321b is, for example, a region from the bent portion to the lead tab 340.

Through this, the apparatus and method for manufacturing a secondary battery, and/or a secondary battery manufactured thereby, according to an embodiment of the present invention, can efficiently utilize the space inside the case 330.

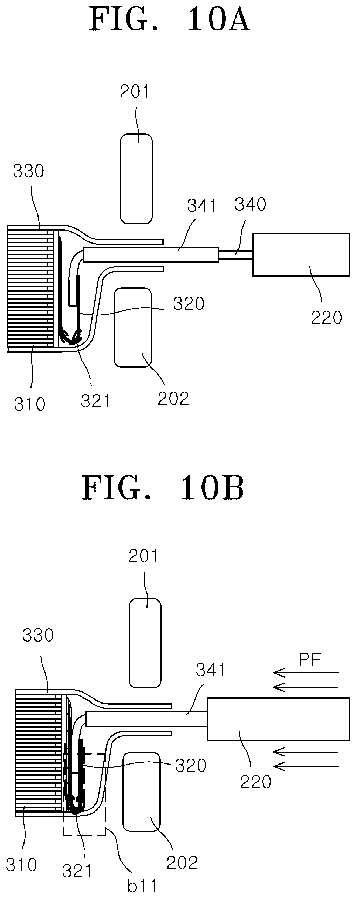

FIG. 10A to FIG. 10C are schematic views illustrating an apparatus and/or method for manufacturing a secondary battery according to an embodiment of the present invention.

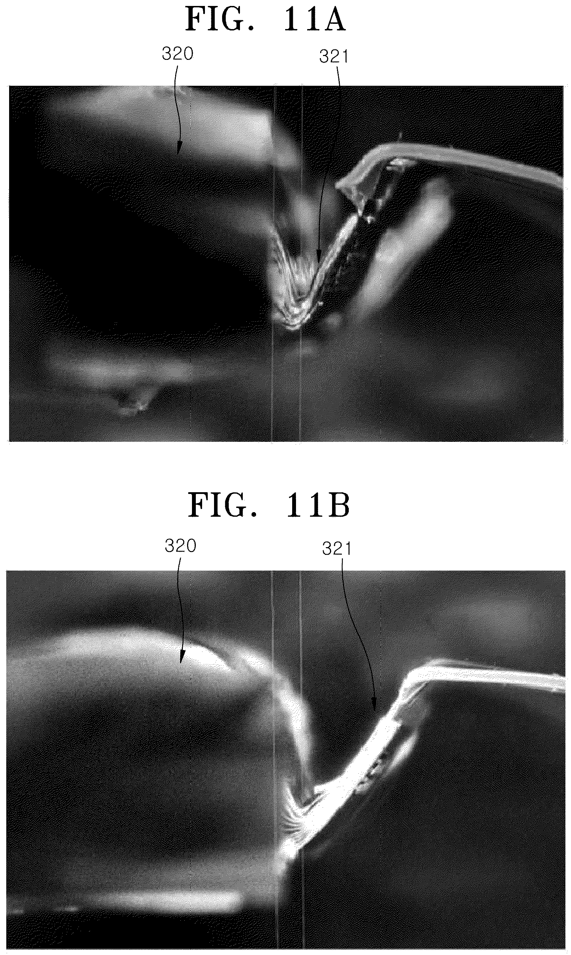

FIG. 11A and FIG. 11B are images illustrating a tab manufactured according to an embodiment of the present invention.

FIG. 10A illustrates that the electrode assembly 310 and the tab 320 on which the preliminary bent portion 321 is formed are accommodated in the case 330. In an embodiment, the tab 320 is connected to the lead tab 340. At least a portion of the lead tab 340 may be surrounded by the tape 341.

In an embodiment, the shape of the preliminary bent portion 321 is, for example, as illustrated in FIG. 11A and/or FIG. 11B. In an embodiment, as illustrated in FIG. 11A and/or FIG. 11B, the preliminary bent portion 321 is a groove formed from an upper surface of the tab 320 to a depth of 50% to 200% of a thickness of the tab 320.

FIG. 10B illustrates that the tab pusher 220 applies a force to the tab 320 while pushing the lead tab 340 toward the case 330 in a second direction PF. Accordingly, the tab 320 is bent based on the bent portion bent in a V-shape along the preliminary bent portion 321 to form a bend b11 in the shape of the number "11."

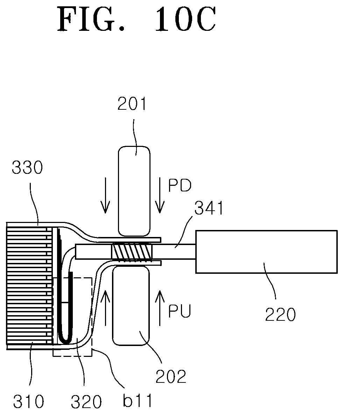

FIG. 10C illustrates that as the sealing top 201 descends (in the PD direction) and the sealing bottom 202 ascends (in the PU direction), the lead tabs 340 are fixed to the case 330.

As can be seen through FIGS. 10A, 10B, and 10C, according to an embodiment of the present invention, a secondary battery in which an upper space of the case 330 can be efficiently utilized and/or a U-shaped bend of the tab 320 can be improved, and a method of manufacturing the same are provided.

In one or more embodiments, the apparatus for manufacturing a secondary battery, the secondary battery manufactured by the method of manufacturing a secondary battery, and/or a secondary battery according to an embodiment of the present invention include the components described in FIGS. 1 to 4. Herein, the components included in the secondary battery will be described in further detail.

### Positive electrode active material

As a positive electrode active material, a compound (lithiated intercalation compound) that is capable of reversible intercalation and deintercalation of lithium may be used. In an embodiment, one or more of a composite oxide of lithium and a metal selected from cobalt, manganese, nickel, and a combination thereof may be used.

The composite oxide may be a lithium-transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any of the following chemical formulas may be used. LiₐA1_{-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); or LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel content of greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide. The high-nickel-based positive electrode active material may be capable of realizing high capacity and can be applied to high-capacity and high-density lithium secondary batteries.

### Positive electrode 10

The positive electrode 10 for the lithium secondary battery 100 may include a current collector and a positive electrode active material layer formed on the current collector. The positive electrode active material layer includes a positive electrode active material and may further include a binder and/or a conductive material.

As an example, the positive electrode may further include an additive that can function as a sacrificial positive electrode.

In an embodiment, a content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

The binder well adheres positive electrode active material particles to each other and also well adheres the positive electrode active material to the current collector. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like, but the present invention is not limited thereto.

The conductive material provides conductivity to the electrode, and any suitable material that does not cause a chemical change and is electrically conductive may be used in the configured battery. Examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer, such as a polyphenylene derivative; or a mixture thereof.

In an embodiment, Al may be used as the current collector, but the present invention is not limited thereto.

### Negative electrode active material

A negative electrode active material may include a material capable of reversible intercalation and deintercalation of lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate shape, flake, spherical shape or fiber-shaped natural graphite or artificial graphite. Examples of the amorphous carbon may include soft carbon or hard carbon, a mesophase pitch carbonized product, calcined coke, and the like.

In an embodiment, the lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0 < x ≤ 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on a surface of the silicon particles. For example, the silicon-carbon composite may include a secondary particle (core) in which silicon primary particles are agglomerated and an amorphous carbon coating layer (shell) located on the surface of the secondary particle. In an embodiment, the amorphous carbon may be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

### Negative electrode 20

The negative electrode 20 for the lithium secondary battery 100 includes a current collector and a negative electrode active material layer located on the current collector. The negative electrode active material layer includes a negative electrode active material and may further include a binder and/or a conductive material.

In an embodiment, for example, the negative electrode active material layer may include 90 wt% to 99 wt% of the negative electrode active material, 0.5 wt% to 5 wt% of the binder, and 0 wt% to 5 wt% of the conductive material.

The binder well adheres negative electrode active material particles to each other and also well adheres the negative electrode active material to the current collector. A non-aqueous binder, an aqueous binder, a dry binder, or a combination thereof may be used as the binder.

In an embodiment, the non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The conductive material provides conductivity to the electrode, and any suitable material that does not cause a chemical change and is electrically conductive may be used in the configured battery. Examples of the conductive material may include a carbon-based material, such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer, such as a polyphenylene derivative; or a mixture thereof.

In an embodiment, the negative electrode current collector may be selected from a copper foil, a nickel foil, a stainless steel foil, a titanium foil, a nickel foam, a copper foam, a polymer substrate coated with a conductive metal, and a combination thereof.

### Electrolyte

The electrolyte for the lithium secondary battery 100 may include a non-aqueous organic solvent and a lithium salt.

The non-aqueous organic solvent is a medium through which ions taking part in the electrochemical reaction of a battery can move.

The non-aqueous organic solvent may be a carbonate-based, ester-based, ether-based, ketone-based, alcohol-based solvent, aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In an embodiment, if a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and is a source of lithium ions in a battery, enables a basic operation of a lithium secondary battery, and improves the movement of the lithium ions between positive and negative electrodes. Representative examples of the lithium salt may include one or two or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator 30

Depending on a type of the lithium secondary battery 100, the separator 30 may be present between the positive electrode 10 and the negative electrode 20. The separator 30 may include polyethylene, polypropylene, polyvinylidene fluoride, or a multilayer film of two or more layers thereof, and, in an embodiment, may include a mixed multilayer film, such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof located on one surface or both, or opposite, surfaces of the porous substrate.

The porous substrate may be a polymer film formed of a polymer, or a copolymer or a mixture of two or more selected from polyolefins, such as polyethylene, polypropylene, and the like, polyesters, such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, a glass fiber, and polytetrafluoroethylene (e.g., Teflon).

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one coating layer or may be present in a form in which a coating layer including organic materials and a coating layer including inorganic materials are stacked.

An apparatus and method for manufacturing a secondary battery, and a secondary battery according to one or more embodiments can provide improved bending quality of the secondary battery.

Further, an apparatus and method for manufacturing a secondary battery, and a secondary battery according to one or more embodiments can secure a space margin of the secondary battery.

However, it will be appreciated by persons skilled in the art that aspects and effects that can be achieved through the present invention are not limited to those described herein and other aspects, effects, and advantages of the present invention will be more clearly understood from the detailed description.

Although some example embodiments of the present invention have been described above, the present invention is not limited thereto, and various modifications can be made within the scope of the claims and the detailed description of the invention and the accompanying drawings, and are to be understood to also belong to the scope of the present invention.

## Claims

1. An apparatus (200) for manufacturing a secondary battery (100), the apparatus (200) comprising:
a roller (210) configured to apply a force in a first direction to at least a portion of a tab (320) extending from an electrode assembly (310) to form a preliminary bent portion (321) in at least the portion of the tab (320); and
a tab pusher (220) configured to apply a force to the tab (320) in a second direction different from the first direction such that the tab (320) has a shape in which one side of the bent tab (320) and the other side of the bent tab (320) are formed parallel or in an angle of 20° to -20° with respect to each other.

2. The apparatus (200) as claimed in claim 1, wherein
the first direction is a direction perpendicular to a direction in which the tab (320) extends, and
the roller (210) is configured to form the preliminary bent portion (321) while rotating in the first direction on the tab (320).

3. The apparatus (200) as claimed in claim 1 or 2, further comprising a support (230) comprising a groove (231) formed in the first direction on an upper portion thereof,
wherein the roller (210) is configured to rotate along the groove (231) while applying a force to the tab (320) placed on the support to form the preliminary bent portion (321).

4. The apparatus (200) according to any one of claims 1 to 3, wherein the preliminary bent portion (321) is formed at a position of 0.2 mm to 0.8 mm from the electrode assembly (310) in a direction in which the tab (320) extends.

5. The apparatus (200) according to any one of claims 1 to 4, wherein
the second direction is a direction opposite to a direction in which the tab (320) extends, and
the tab pusher (220) is configured to apply a force toward the electrode assembly (310) in the second direction.

6. The apparatus (200) according to any one of claims 1 to 5, further comprising a jig configured to apply a force to the tab (320) such that the tab (320) forms a bent portion along the preliminary bent portion (321),
wherein the tab pusher (220) is configured to allow the tab (320) to remain in the shape in which one side of the bent tab (320) and the other side of the bent tab (320) are formed parallel or in an angle of 20° to -20° with respect to each other.

7. A method of manufacturing a secondary battery (100), the method comprising:
forming a preliminary bent portion (321) in at least a portion of a tab (320) extending from an electrode assembly (310) by applying a force in a first direction to at least the portion of the tab (320); and
forming the tab (320) in a shape in which one side of the bent tab (320) and the other side of the bent tab (320) are formed parallel or in an angle of 20° to -20° with respect to each other centered on the preliminary bent portion (321) by applying a force to the tab (320) in a second direction different from the first direction.

8. The method as claimed in claim 7, wherein
the first direction is a direction perpendicular to a direction in which the tab (320) extends, and
the forming of the preliminary bent portion (321) comprises forming the preliminary bent portion (321) while a roller (210) rotates on the tab (320) in the first direction.

9. The method as claimed in claim 7 or 8, wherein the forming of the preliminary bent portion (321) comprises:
moving the tab (320) in the first direction onto a support (230) in which a groove (231) is formed; and
forming the preliminary bent portion (321) by rotating the roller (210) along the groove (231) while applying a force to the tab (320) placed on the support (230).

10. The method according to any one of claims 7 to 9, wherein the preliminary bent portion (321) is formed at a position of 0.2 mm to 0.8 mm from the electrode assembly (310) in a direction in which the tab (320) extends.

11. The method according to any one of claims 7 to 10, wherein the forming of the tab (320) in the shape in which one side of the bent tab (320) and the other side of the bent tab (320) are formed parallel or in an angle of 20° to -20° with respect to each other comprises:
accommodating the electrode assembly (310) and the tab (320) extending from the electrode assembly (310) in a case; and
applying a force to the tab (320) in the second direction toward the case
wherein the second direction is a direction opposite to a direction in which the tab (320) extends.

12. A secondary battery (100) comprising:
a case (330);
an electrode assembly (310) accommodated in the case (330);
a tab (320) extending from the electrode assembly (310) and comprising a portion exposed to an outside of the case (330),
wherein another portion of the tab (320) is bent along a preliminary bent portion (321) in the case (330).

13. The secondary battery (100) as claimed in claim 12, wherein the tab (320) comprises a first portion (321a) facing a side from the preliminary bent portion (321), and a second portion (321b) facing another side from the preliminary bent portion (321), the first portion (321a) and the second portion (321b) having an angle of 20° to -20° with respect to each other.

14. The secondary battery (100) as claimed in claim 13, wherein the first portion (321a) and the second portion (321b) form a shape in which one side of the bent tab (320) and the other side of the bent tab (320) are formed parallel with respect to each other.

15. The secondary battery (100) according to any one of the claims 12 to 14, wherein the preliminary bent portion (321) is formed at a position of 0.2 mm to 0.8 mm from the electrode assembly (310) in a direction in which the tab (320) extends.
